# FASCICULE DE BREVET EUROPEEN

(11) **EP 0 366 521 B1**
(45) Date de publication et mention de la délivrance du brevet: **17.03.1993**
(21) Numéro de dépôt: 89402855.4
(22) Date de dépôt: 16.10.1989
(51) Int. Cl.: H02P 7/00, B60J 7/057

(54) **Dispositif d'alimentation d'un moteur électrique à courant continu, notamment pour toît ouvrant de véhicule automobile**
Stromversorgungsvorrichtung für einen elektrischen Gleichstrommotor, insbesondere für ein Kraftfahrzeugschiebedach
Electric DC motor power supply device, especially for a motor vehicle sliding roof

(30) Priorité: 24.10.1988 FR 8813891
(43) Date de publication de la demande: 02.05.1990
(73) Titulaire: ECIA - EQUIPEMENTS ET COMPOSANTS POUR L'INDUSTRIE AUTOMOBILE, F-25400 Audincourt (FR)
(72) Inventeur: Coullerut, Jacques, F-25230 Selincourt (FR); Cuchet, Daniel, F-25200 Montbeliard (FR)
(74) Mandataire: Polus, Camille

(56) Documents cités:
- EP-A- 0 064 929
- DE-A- 3 439 207
- US-A- 4 644 235

## Description

La présente invention concerne un dispositif d'alimentation d'un moteur électrique à courant continu notamment pour toît ouvrant de véhicule automobile.

On connaît déjà dans l'état de la technique des dispositifs de ce type comportant des moyens de régulation de la tension d'alimentation et des moyens de commande du fonctionnement du moteur et d'inversion du sens de rotation de celui-ci, actionnables par un utilisateur.

Cependant, ces dispositifs présentent un certain nombre d'inconvénients dans la mesure où les efforts demandés au moteur varient en fonction d'un certain nombre de paramètres notamment de fonctionnement du véhicule, comme sa vitesse de déplacement.

Il arrive ainsi dans certain cas, par exemple lorsque la vitesse de déplacement du véhicule est relativement élevée, que l'effort à fournir par le moteur électrique, par exemple pour ouvrir le toît ouvrant de ce véhicule, soit tel que le moteur s'échauffe et que les moyens de déclenchement thermique de protection de celui-ci, coupent l'alimentation du moteur.

Le but de l'invention est donc de résoudre ces problèmes en proposant un dispositif d'alimentation du moteur qui soit simple, fiable, d'un prix de revient peu élevé et qui permette d'adapter le couple d'entraînement du moteur notamment aux conditions de fonctionnement du véhicule et du toit ouvrant.

A cet effet l'invention a pour objet un dispositif d'alimentation d'un moteur électrique à courant continu, notamment pour toît ouvrant de véhicule automobile, comportant des moyens de régulation de la tension d'alimentation et des moyens de commande du fonctionnement du moteur et d'inversion du sens de rotation de celui-ci, actionnables par un utilisateur, caractérisé en ce qu'il comporte en outre des moyens de régulation de la vitesse de rotation du moteur en fonction de l'effort demandé à celui-ci, connectés en série avec le moteur, et des moyens de court-circuitage des moyens de régulation de la vitesse de rotation du moteur sous la commande de moyens d'activation suivant une séquence pré-établie.

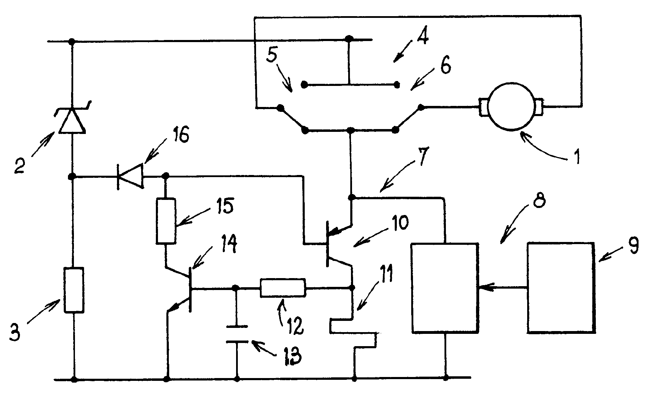

L'invention sera mieux comprise à l'aide de la description qui va suivre, donnée uniquement à titre d'exemple et faite en se référant au dessin annexé, qui représente un schéma synoptique d'un dispositif d'alimentation selon l'invention.

Ainsi qu'on peut le voir sur cette figure, ce dispositif d'alimentation d'un moteur électrique 1 à courant continu, notamment pour toît ouvrant de véhicule automobile, comporte des moyens de régulation de la tension d'alimentation, ces moyens de régulation comprenant une diode Zener 2 en série avec une résistance 3, connectées entre les deux branches de l'alimentation. Par ailleurs, le dispositif selon l'invention comporte également des moyens 4 de commande du fonctionnement du moteur électrique 1 et d'inversion du sens de rotation de celui-ci, ces moyens comprenant par exemple des commutateurs 5 et 6 actionnables par un utilisateur.

Par ailleurs, le dispositif selon l'invention comporte également des moyens 7 de régulation de la vitesse de rotation du moteur en fonction de l'effort demandé à celui-ci, ces moyens étant connectés en série avec le moteur électrique, et des moyens 8 de court-circuitage des moyens de régulation de la vitesse de rotation du moteur sous la commande de moyens d'activation 9 suivant une séquence pré-établie. Il est à noter que les moyens de court-circuitage peuvent être constitués par tout organe approprié tel qu'un contact de relais ou autre.

Les moyens de régulation de la vitesse de rotation du moteur comprennent avantageusement un transistor PNP 10 dont le circuit émetteur-collecteur est connecté en série avec un shunt 11 dans le circuit d'alimentation du moteur. Aux bornes de ce shunt sont connectés une résistance 12 et un condensateur 13 adaptés pour réaliser une moyenne temporelle du signal prélevé aux bornes du shunt, le point milieu entre la résistance 12 et le condensateur 13 étant connecté à la base d'un transistor NPN 14 dont l'émetteur est relié à la masse et dont le collecteur est relié à une borne d'une résistance 15.

L'autre borne de cette résistance 15 est reliée d'une part à l'anode d'une diode 16 dont la cathode est reliée au point milieu entre la diode Zener 2 et la résistance 3 constituant les moyens de régulation de la tension d'alimentation, et d'autre part à la base du transistor PNP 10 décrit précédemment, de manière à constituer des moyens d'asservissement en effort du moteur et ce quelque soit le sens de rotation de celui-ci.

En effet, le courant circulant dans le moteur variant en fonction de l'effort demandé à celui-ci, la tension aux bornes du shunt, image de ce courant, varie en conséquence et commande plus ou moins le transistor 14 à travers la résistance 12 et le condensateur 13, de manière à commander plus ou moins le transistor 10 à travers la résistance 15 et donc faire varier la vitesse de rotation du moteur en faisant varier la tension d'alimentation de celui-ci.

Il est à noter que la diode 16 constitue des moyens de protection de la diode Zener 2 en empêchant tout accroissement destructeur de tension aux bornes de cette diode.

Cependant, il est des cas où la régulation de vitesse du moteur peut être supprimée lorsque l'on désire par exemple obtenir une ouverture ou une fermeture rapide par exemple du toit ouvrant du véhicule, sur une course déterminée.

Dans ce cas, les moyens d'activation 9 qui peuvent être constitués par tout organe approprié, tel qu'un séquenceur ou un microprocesseur, relié à des moyens de détection de la position du toît ouvrant, sont adaptés pour commander les moyens de court-circuitage 8 afin que le moteur soit alimenté sous sa pleine tension de manière à obtenir la pleine vitesse de celui-ci.

Il va de soi que ces moyens d'activation peuvent commander les moyens de court-circuitage suivant une séquence pré-établie par exemple en fonction du type du véhicule, du type du toit ouvrant, de la vitesse de déplacement de celui-ci, etc.

## Revendications

1. Dispositif d'alimentation d'un moteur électrique à courant continu, notamment pour toît ouvrant de véhicule automobile, comportant des moyens (2,3) de régulation de la tension d'alimentation et des moyens (4,5,6) de commande du fonctionnement du moteur et d'inversion du sens de rotation de celui-ci, actionnables par un utilisateur, caractérisé en ce qu'il comporte en outre des moyens de régulation (7) de la vitesse de rotation du moteur en fonction de l'effort demandé à celui-ci, connectés en série avec le moteur (1), et des moyens de court-circuitage (8) des moyens de régulation de la vitesse de rotation du moteur sous la commande de moyens d'activation (9) suivant une séquence pré-établie.

2. Dispositif selon la revendication 1, caractérisé en ce que les moyens de régulation comprennent un premier transistor (10) et un shunt (11) connectés en série dans le circuit d'alimentation du moteur (1), un second transistor (14) de commande du premier transistor (10) étant connecté aux bornes du shunt.

3. Dispositif selon la revendication 2, caractérisé en ce que le second transistor (14) est connecté aux bornes du shunt (11) à travers des moyens (12,13) adaptés pour réaliser une moyenne temporelle du signal prélevé aux bornes de shunt.

4. Dispositif selon la revendication 3, caractérisé en ce que les moyens adaptés pour réaliser une moyenne temporelle comprennent une résistance (12) et un condensateur (13) connectés en parallèle aux bornes du shunt, le point milieu entre cette résistance et ce condensateur étant connecté à la base du second transistor (14), tandis que le collecteur du second transistor (14) est relié à la base du premier transistor (10) à travers une résistance (15).

5. Dispositif selon l'une quelconque des revendications précédentes, caractérisé ence que les moyens d'activation (9) sont reliés à des moyens de détection de la position du toît ouvrant.

## Patentansprüche

1. Vorrichtung für die Stromversorgung eines elektrischen Gleichstrommotors, insbesondere für das Schiebedach eines Kraftfahrzeuges, die Mittel (2, 3) für die Regelung der Speisespannung und Mittel (4, 5, 6) für die Betätigung der Funktion des Motors und die Umkehr seiner Drehrichtung aufweist, die von einem Benutzer betätigt werden können,
**dadurch gekennzeichnet,** **daß** sie außerdem Mittel (7) für die Regelung der Drehgeschwindigkeit des Motors in Abhängigkeit von der von ihm verlangten Leistung aufweist, die mit dem Motor (1) in Serie geschaltet sind, sowie Mittel (8) für den Kurzschluß der Mittel für die Regulierung der Drehgeschwindigkeit des Motors unter der Steuerung von Aktivierungsmitteln (9) nach einer vorbestimmten Sequenz.

2. Vorrichtung nach Anspruch 1,
**dadurch gekennzeichnet, daß** die Regulierungsmittel einen ersten Transistor (10) und einen Nebenschlußwiderstand (11) aufweisen, die in dem Speisekreis des Motors (1) in Reihe geschaltet sind, und daß ein zweiter Transistor (14) für die Betätigung des ersten Transistor (10) an die Anschlußklemmen des Nebenschlußwiderstandes angeschlossen ist.

3. Vorrichtung nach Anspruch 2,
**dadurch gekennzeichnet, daß** der zweite Transistor (14) über Mittel (12 13) an die Anschlußklemmen des Nebenschlußwiderstandes (11) angeschlossen ist, die dafür ausgelegt sind, einen mittleren Zeitwert des Signals zu bilden, das an den Anschlußklemmen des Nebenschlußwiderstandes abgenommen wird.

4. Vorrichtung nach Anspruch 3,
**dadurch gekennzeichnet, daß** die Mittel für die Erzeugung eines mittleren Zeitwertes einen Widerstand (12) und einen Kondensator (13) aufweisen, die parallel an die Anschlußklemmen des Nebenschlußwiderstandes angeschlossen sind und der Mittelpunkt zwischen diesem Widerstand und diesem Kondensator an die Basis des zweiten Transistors (14) angeschlossen ist, während der Verteiler des zweiten Transistors (14) über einen Widerstand (15) an die Basis des ersten Transistors (10) angeschlossen ist.

5. Vorrichtung nach einem der vorausgegangenen Ansprüche,
**dadurch gekennzeichnet, daß** die Aktivierungsmittel (9) an Mittel für die Bestimmung der Position des Schiebedaches angeschlossen sind.

## Claims

1. A device for the supply of a direct-current electric motor, in particular for the sun roof of a motor vehicle, including means (2,3) for regulating the supply voltage and means (4,5,6) for controlling the operation of the motor and for reversing the rotational direction of the latter, capable of being operated by a user, characterized in that it also includes means (7) for regulating the rotational speed of the motor as a function of the effort required of the latter, connected in series with the motor (1), and means (8) for short-circuiting the means for regulating the rotational speed of the motor under the control of activating means (9) following a pre-determined sequence.

2. A device according to Claim 1, charactorinod in that the regulating means comprise a first transistor (10) and a shunt (11) connected in series in the supply circuit of the motor (1), a second transistor (14) for controlling the first transistor (10) being connected to the terminals of the shunt.

3. A device according to Claim 2, characterised in that the second transistor (14) is connected to the terminals of the shunt (11) via means(12,13) adapted to produce a temporal average of the signal taken at the terminals of the shunt.

4. A device according to Claim 3, characterised in that the means adapted to produce a temporal average comprise a resistor (12) and a capacitor (13) connected in parallel to the terminals of the shunt, the middle point between this resistor and this capacitor being connected to the base of the second transistor (14), whilst the collector of the second transistor (14) is connected to the brae of the first transistor (10) via a resistor (15).

5. A device according to any one of the previous claim, characterised in that the activating means (9) are connected to means for detecting the position of the sun roof.
